Europäisches Patentamt

European Patent Office

Office européen des brevets

(19)

(11) Publication number: **0 129 406**
**A2**

(12) # EUROPEAN PATENT APPLICATION

(21) Application number: **84304002.3**

(22) Date of filing: **14.06.84**

(51) Int. Cl.³: **A 62 D 9/00**
**B 01 D 53/36, B 01 J 23/40**

(30) Priority: **15.06.83 GB 8316276**

(43) Date of publication of application:
**27.12.84 Bulletin 84/52**

(84) Designated Contracting States:
**BE DE FR**

(71) Applicant: **UNITED KINGDOM ATOMIC ENERGY**
**AUTHORITY**
**11 Charles II Street**
**London SW1Y 4QP(GB)**

(72) Inventor: **Wright, Christopher John**
**41 Oxford Road**
**Abingdon Oxon(GB)**

(72) Inventor: **Tofield, Bruce Cedric**
**23 Oxford Road**
**Abingdon Oxon(GB)**

(72) Inventor: **Sampson, Christopher Falkland**
**36 Porchester Road**
**Newbury Berkshire(GB)**

(74) Representative: **Mansell, Keith Rodney**
**Patents Branch United Kingdom Atomic Energy**
**Authority 11 Charles II Street**
**London SW1Y 4QP(GB)**

(54) Breathing apparatus.

(57) A catalyst device for purifying a carbon monoxide containing atmosphere, e.g. for use in breathing apparatus for underground workers, comprises a chamber containing a catalyst bed for low temperature oxidation of carbon monoxide and having an inlet for permitting ingress of air from the atmosphere and an exit for connection to the face of the user, e.g. by means of a face mask. When the mask (for example) and the chamber are in pneumatic connection, inhalation through the mask causes air to enter the chamber via the inlet, to contact the catalyst bed for catalytic oxidation of CO therin, if present, and thence pass to the mask.

In order to provide resistance to deactivation by water vapour and obviate the need for a drying agent, the catalyst bed comprises one or more platinum group metals in combination with tin (IV) oxide e.g. Pt and Pd in combination with tin (IV) oxide.

EP 0 129 406 A2

Breathing Apparatus

This invention relates to a catalytic device for a carbon monoxide containing atmosphere prior to inhalation by a user.

Underground workers such as miners need to be provided with protection against the toxic effects of inhaling excessive quantities of carbon monoxide which may be present in underground atmospheres.  They may therefore carry a breathing apparatus consisting of a face-mask and a sealed cannister containing a drying agent and a catalyst for the low temperature oxidation of carbon monoxide.  Such apparatus is frequently referred to as a "self-rescuer". If the carbon monoxide concentration in an underground atmosphere rises above a maximum level, the worker inhales through the "self-rescuer".

A known catalyst in a "self-rescuer" is Hopcalite which is a combination of oxides of manganese and copper and small amounts of promoters such as CaO. It is capable of oxidising carbon monoxide to carbon dioxide in various concentrations in air.  Hopcalite, however, has the disadvantage that it is readily deactivated by moisture and accordingly must be hermetically sealed within an enclosure immediately after its preparation and before it is used. Also, Hopcalite must be used in combination with a drying agent in the above application so that air passing through the catalyst bed is dry.

In the present invention, the above-mentioned problems are substantially reduced by substituting a particular catalyst for Hopcalite.  Thus, the invention provides a catalytic device for purifying a carbon monoxide containing atmosphere prior to inhalation by a user comprising a chamber containing a catalyst bed comprising one or more platinum-group metals in combination with tin (IV) oxide for the low temperature oxidation of carbon monoxide, the chamber having an inlet for permitting ingress of air constituting said atmosphere and having an exit pneumatically connected to the chamber, the exit being pneumatically connectable to the face of the user such that inhalation thereby causes air to enter the chamber via the inlet, to contact the catalyst bed for carbon monoxide therein, if present, to be oxidised catalytically and thence to pass to the exit and to the face of the user for inhalation.

Application of the invention is not restricted to the above-mentioned "self-rescuer". Thus, it may have application in safety equipment for use in any confined space where deleterious levels of carbon monoxide are likely to be found and in the removal of carbon monoxide from the gases inhaled by cigarette smokers. Conveniently, a face mask may be used to assist inhalation by the user.

References to tin (IV) oxide in this specification also include other oxides of tin which are commonly referred to by the comprehensive formula $SnO_{2-x}$ and other formulations of doped tin oxides where the major proportion thereof is $SnO_2$. References to metals also include compounds of those metals such as their simple oxides; their mixed oxides with other oxide(s) present in the catalyst; alloys formed between the metals present in the catalyst; and other compounds such as carbonates which may be formed by reaction between the metal(s) and the ambient atmosphere.

The catalyst used in the device of the invention has been found to have comparable activity to Hopcalite in the oxidation of carbon monoxide but to have greater resistance to deactivation by water vapour. The device of the invention can therefore have the following advantages over the above-mentioned known apparatus: it can employ a smaller quantity of drying agent (or no drying agent) and is therefore lighter; its design can be simplified because the need for hermetic sealing is removed; it can have a greater shelf-life and a greater operating life. Furthermore, the reaction of Hopcalite with water vapour is exothermic so that, in its use, the temperature of inhaled air is raised thereby causing physical discomfort to the user. The present invention ameliorates this problem since the catalyst used therein is not water sensitive.

A catalyst comprising one or more platinum group metals in combination with tin (IV) oxide may be made, for example, by impregnating $SnO_2$ (or a precursor therefor) with a solution of a compound or compounds or a salt or salts of the one or more platinum group metals followed by reduction or other transformation thereof to the corresponding metal or metals. By platinum group metals is meant the metals Pt, Pd, Os, Ir, Ru and Rh. Examples of suitable platinum group metals are platinum and palladium and the catalyst may, for example comprise both platinum and palladium in combination with tin (IV) oxide. Examples of suitable compounds and salts are tetrammine platinum (II) chloride, Pt $(NH_3)_4ClH_2O$, tetrammine platinum (II) hydroxide, platinum nitrate, platinum acetylacetonate, palladium acetate and palladium analogues of the above platinum compounds. The catalyst may, for example contain between 0.05% and 5% by weight of the one or more platinum group metals.

In addition the catalyst may contain other metals which can promote the rate of the CO oxidation reaction. Examples of such metals include the following transition metals: nickel, iron, chromium, manganese, vanadium, cobalt and the group IB metals such as copper and silver, and other B metals such as antimony.

The tin (IV) oxide component of the catalyst can be present as a pure phase or as a combination with other oxides which may be present to enhance the dispersion of the tin (IV) oxide. The catalyst can be presented to the carbon monoxide in a variety of forms which include granules, pellets, extrudates and coatings. Alternatively, the catalyst could be carried on a substrate, e.g. by being coated onto the surface of a ceramic or metal artefact or impregnated into the pores of a low pressure drop artefact such as a honeycomb cross-section monolith which is known in the emission control field. The latter form has the particularly advantageous properties of low resistance to flow in combination with a high external catalyst surface area; this enables the quantity of catalyst required to reduce the carbon monoxide concentration to the desired level to be minimised. Examples of other forms of low pressure-drop artefact are monoliths made from metal and those made from fibre. A variety of metals can be used in view of the intended low-temperature use of the catalyst. Among the main factors to be taken account of in selecting a suitable metal are cost, corrosion properties, and inhalation toxicity. Examples of fibres that may be used are carbons such as provided commercially in cloth or felt form by Charcoal Cloth Ltd. and Le Carbone (U.K.) Ltd., and SAFFIL fibre provided commercially by ICI plc.

A preferred design of monolith, if used, is one with as high a cell density as possible consistent with mechanical rigidity and low pressure drop.  High cell density monoliths provide larger external surface areas per unit mass of active catalyst which is a significant advantage in a process which is substantially diffusion controlled such as the oxidation of carbon monoxide with which the present invention is concerned.

The tin (IV) oxide can be made by methods known in the art subject to the desirability of avoiding contamination thereof by chloride anions if maximum catalytic activity is to be achieved.  High surface area tin (IV) oxide can be obtained by precipitation from solutions of tin compounds or by adsorption of tin containing colloidal dispersions or solutions onto substrates or by absorption of tin containing colloidal dispersions or solutions into pores, followed by drying and firing.  Promoters such as antimony, nickel, iron etc. can be provided, e.g. by dissolution in a solution from which the tin (IV) oxide is obtained, by addition to a dispersion of a tin compound, by adsorption onto the surface of tin (IV) oxide, or any general method known in the art of catalyst preparation.

Several ways of carrying out the invention will now be described as follows by way of example only.  Also described below is a comparative experiment, i.e. not an example of the invention.

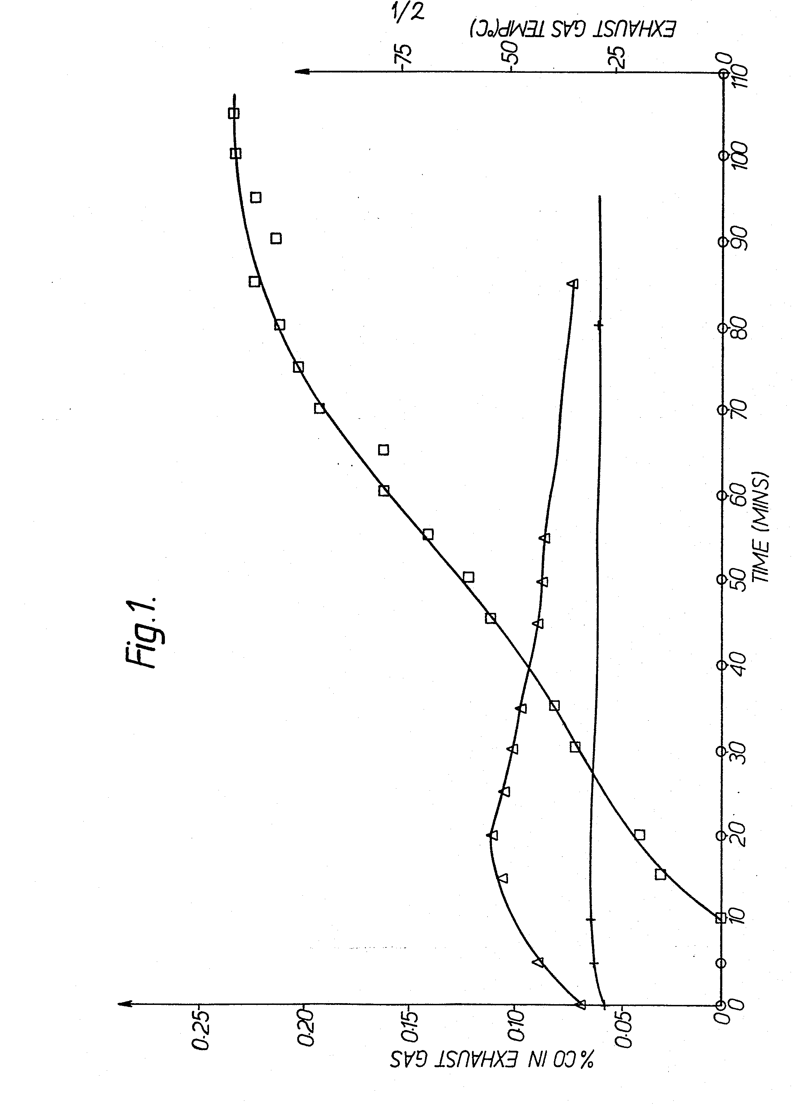

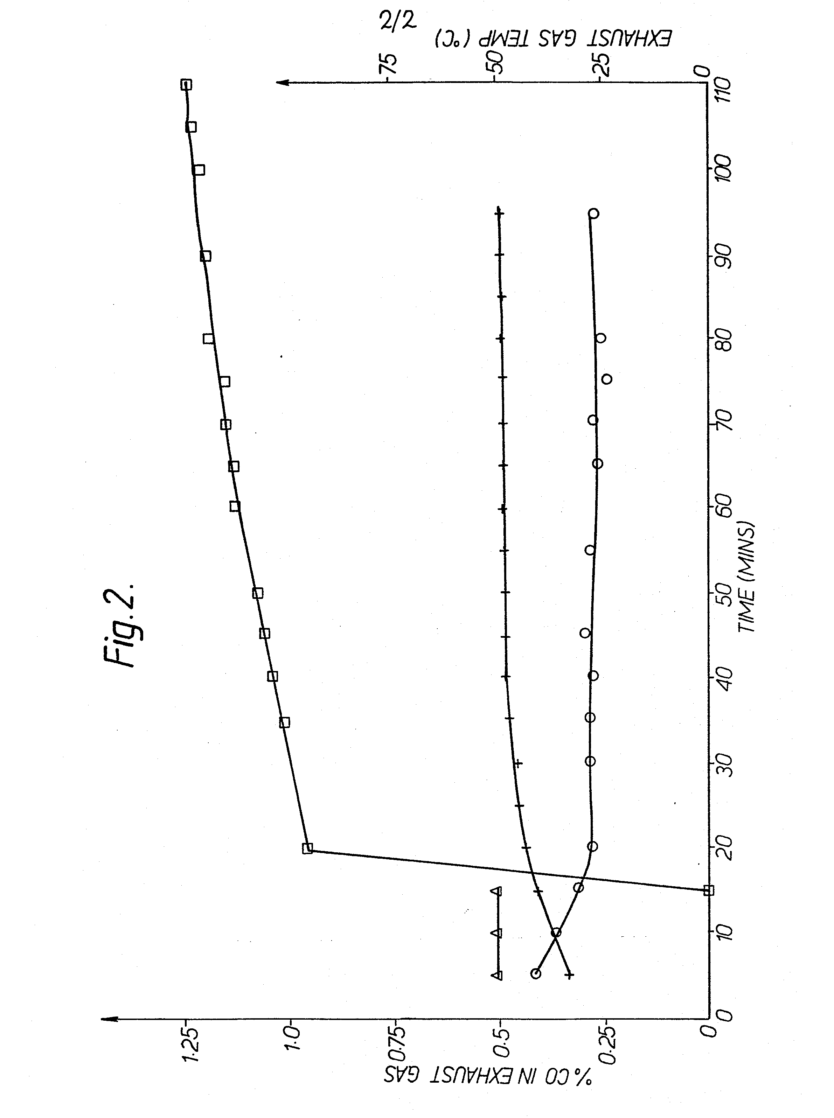

Reference will be made to the accompanying drawings wherein Figures 1 and 2 show the relationship between time and (i) percentage of CO in the exhaust gas and (ii) the exhaust gas temperature in tests carried out using a device of the invention and using a known device.  The tests on which Figure 1 is based were carried out at an initial CO concentration of 0.25% and those on which Figure 2 is based were carried out at an initial CO concentration of 1.5%.

## EXAMPLE 1

### Preparation of a Catalyst

A solution containing tetrammine platinum (II) chloride, $Pt(NH_3)_4Cl_2.H_2O$ (0.99 g), and palladium (II) acetate, $Pd(CH_3COO)_2$ (1.16 g), in A.R. grade 0.880 ammonia (25 ml) was added to a metastannic acid slurry containing 376 g $l^{-1}$ of $SnO_2$ and supplied by Keeling and Walker Limited (117 ml). The resulting dispersion was well stirred for ½ hour to ensure thorough mixing and then dried at 70°C. The resulting solid was fired in air for 1 hour at 350°C and then broken up into particles which were washed in boiling water to remove all detectable traces of chloride ions. Finally, the particles were fired in air at 350°C for 1 hour and, after cooling, reduced in flowing hydrogen (30 ml $min^{-1}$) at 150°C for 1 hour to give catalyst particles consisting of 1.25% Pd, 1.25% Pt and the remainder $SnO_2$, where the percentages are by weight. The catalyst particles were stored in an air filled, sealed container at ambient temperature.

### Testing of Catalyst

The above prepared catalyst (44 g) constituting a catalyst bed in a silica tube was exposed to a dried air stream containing a pre-set concentration of CO. After an arbitrary period of time, the air stream was saturated with water. The CO concentration in the exit stream was measured chromatographically at periodic intervals. Tests were carried out using pre-set CO concentrations of 0.25% and 1.5% respectively and the air stream was pumped
sinusoidally over the catalyst bed at an average flow rate
of 4 1 $min^{-1}$.

COMPARATIVE EXAMPLE A

The same tests as described in Example 1 above were
carried out for comparative purposes using a Hopcalite
catalyst (44 g) of similar particle size. The Hopcalite
contained a mixture of CuO and $MnO_2$ (possibly in the
ratio of 40:60 by weight) and was shown by emission
spectroscopy to contain 0.65% Ca.

When the air stream was dry, both catalysts effected
complete conversion of the CO as evidenced by absence of
detectable CO in the exit stream. However, the Hopcalite
catalyst was found to be completely deactivated at 178
minutes after exposure to water when the CO concentration
in the air stream was 0.25% and at 170 minutes when the CO
concentration was 1.5%. In contrast, the activity of the
Pt/Pd:$SnO_2$ catalyst prepared as above remained
substantially unchanged for periods up to 280 minutes after
exposure to water.

EXAMPLE 2

Preparation of a catalyst on a monolith support

An octagonal prism having a volume of 180 $cm^3$ was
cut from a rectangular block of cordierite, obtained from
Corning, 7 cm long. The weight of the prism was 99
grammes. It was boiled for 1 hour in demineralised water
to remove any surface contaminants before being dried in
air at 70°C.

The monolith was then coated with a tin (IV) oxide sol ($340g$ litre$^{-1}$) by immersion. After each coat had ben applied, excess sol was removed by a jet of compressed air and the monolith was fired in air ($350°C$, 30 mins) with additional firings at this temperature, for 1 hour, after every three coatings. After nine coats the monolith weighed 147 grammes.

Palladium acetate ($1.45g$) was dissolved in the minimum quantity of 0.880 ammonia and added to a tetra-ammine platinous hydroxide solution ($16.2g$) containing 5.87% platinum by weight. Demineralised water ($\sim 20$ cm$^3$) was added to bring the total volume of solution to 40 cm$^3$, which was then used to impregnate the tin (IV) oxide coated monolith uniformly. After drying overnight ($70°C$) and firing ($350°C$, 2 hours) the final weight was 148 grammes, (Monolith 99 g, $SnO_2$ 47.8 g, PtO and PdO 1.2 g). The monolith was stored in an air filled, sealed container at room temperature.

Testing of the monolith

The monolith was sealed into a large diameter glass cylinder and exposed to a dry air stream containing a pre-set concentration of CO. At a desired time, the air stream was saturated with water vapour by passing it up a condenser in which steam was reflexing. The concentration of CO in the exhaust gas stream was monitored chromatographically every five minutes. Tests were carried out using pre-set CO concentrations of 0.25% and 1.5% respectively, with the gas mixture passing continuously through the catalyst bed at an average flow rate of 5 litres min$^{-1}$.

COMPARATIVE EXAMPLE B

The same tests were carried out for comparative purposes using a Hopcalite catalyst in the form of 1-2 mm granules together with an activated charcoal drying agent.

For the test at 0.25% CO concentration, 62 g of Hopcalite and 54 g of charcoal were used. For the 1.5% CO test, the figures were 31 g and 27 g respectively.

The results of the above tests are shown graphically in the accompanying drawings, those at 0.25% CO in Figure 1 and those at 1.5% CO in Figure 2.

Referring to the Figures, the symbols used to indicate particular results are as follows:

O    indicates % CO in exhaust gas for the $SnO_2/Pt/Pd$ catalyst;

▭    indicates % CO in exhaust gas for the Hopcalite catalyst;

+    indicates exhaust gas temperature for the $SnO_2/Pt/Pd$ catalyst

△    indicates exhaust gas temperature for the Hopcalite catalyst, but in Figure 2 indicates the maximum values obtained only.

It can be seen from the Figures that, in both cases, the CO concentration and the temperature of the gas mixture transmitted through the tin (IV) oxide based catalyst are substantially lower than the comparable values for the gas mixture transmitted through the Hopcalite catalyst.

Claims:

1.    A catalytic device for purifying a carbon monoxide containing atmosphere prior to inhalation by a user comprising a chamber containing a catalyst bed for the low temperature oxidation of carbon monoxide, the chamber having an inlet for permitting ingress of air constituting said atmosphere and having an exit pneumatically connected to the chamber, the exit being pneumatically connectable to the face of the user such that inhalation thereby causes air to enter the chamber via the inlet, to contact the catalyst bed for carbon monoxide therein, if present, to be oxidised catalytically, and thence to pass to the exit and to the face of the user for inhalation, characterised in that the catalyst bed comprises one or more platinum-group metals in combination with tin (IV) oxide.

2.    A catalyst device as claimed in claim 1 wherein the catalyst contains between 0.05% and 5% by weight of the one or more platinum group metals.

3.    A catalyst device as claimed in either of the preceding claims wherein the one or more platinum group metals are constituted by one or both of platinum and palladium.

4.    A catalyst device as claimed in any of the preceeding claims wherein the one or more platinum-group metals in combination with tin (IV) oxide is carried on a substrate.

5.    A catalyst device as claimed in claim 5 wherein the substrate is a honeycomb cross-section monolith.

Fig.1.

Fig.2.